(19) Europäisches Patentamt
European Patent Office
Office européen des brevets

(11) **EP 4 130 085 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
*C08G 18/67* (1974.07)      *C08F 290/06* (1995.01)
*C08G 18/10* (1974.07)      *C08G 18/66* (1974.07)
*C08G 18/74* (1974.07)

(21) Application number: **21781193.4**

(22) Date of filing: **29.03.2021**

(52) Cooperative Patent Classification (CPC):
**C08F 290/06; C08G 18/10; C08G 18/66;
C08G 18/67; C08G 18/74**

(86) International application number:
**PCT/JP2021/013216**

(87) International publication number:
**WO 2021/200794 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020   JP 2020060857**

(71) Applicant: **Mitsui Chemicals, Inc.
Tokyo 105-7122 (JP)**

(72) Inventors:
• **NAKAHARA, Risa
  Sodegaura-shi, Chiba 299-0265 (JP)**
• **KAGEOKA, Masakazu
  Sodegaura-shi, Chiba 299-0265 (JP)**
• **YAMASAKI, Satoshi
  Tokyo 105-7122 (JP)**
• **YAMADA, Shirou
  Tokyo 105-7122 (JP)**

(74) Representative: **Hoffmann Eitle
Patent- und Rechtsanwälte PartmbB
Arabellastraße 30
81925 München (DE)**

(54)   **ACTIVE ENERGY RAY-CURABLE POLYURETHANE RESIN, CURABLE RESIN COMPOSITION,
AND PRODUCTION METHOD FOR ACTIVE ENERGY RAY-CURABLE POLYURETHANE RESIN**

(57)   In an active energy ray-curable polyurethane resin including a reaction product of a resin material containing an isocyanate group-terminated prepolymer and a hydroxy group-containing unsaturated compound, the isocyanate group-terminated prepolymer includes a reaction product of a prepolymer material containing a polyisocyanate component containing a xylylene diisocyanate and/or a hydrogenated xylylene diisocyanate, and a polyol component containing a polyoxyalkylene polyol having a number average molecular weight of 6000 or more and 12000 or less, and the viscosity at 25°C of the active energy ray-curable polyurethane resin is 20000 mPa·s or more and 40000 mPa·s or less.

EP 4 130 085 A1

**Description**

TECHNICAL FIELD

The present invention relates to an active energy ray-curable polyurethane resin, a curable resin composition, and an active energy ray-curable polyurethane resin.

BACKGROUND ART

A polyurethane resin which is cured by irradiation with an active energy ray (hereinafter, an active energy ray-curable polyurethane resin) is a polyurethane resin containing an ethylenically unsaturated group, and is widely used in various industrial fields such as adhesives, coating agents, and elastomers.

As an active energy ray-curable polyurethane resin, more specifically, a polyurethane (meth)acrylate oligomer obtained by reacting a 2,4-tolylene diisocyanate with a polyoxypropylene glycol having a number average molecular weight of 1000, then, adding a 2,4-tolylene diisocyanate and a 2-hydroxylethylacrylate to the obtained reaction liquid, and further, reacting the resulting product has been proposed. It has also been proposed that the obtained polyurethane (meth)acrylate is used by mixing with an ethylenically unsaturated compound such as diacrylate of bisphenol A-ethylene oxide adduct (ref: for example, Patent Document 1 (Synthetic Example 1 and Example 1)).

Citation List

Patent Document

Patent Document 1: Japanese Unexamined Patent Publication No. H11-315265

SUMMARY OF THE INVENTION

PROBLEM TO BE SOLVED BY THE INVENTION

On the other hand, as an active energy ray-curable polyurethane resin, further improvement in mechanical strength, weather resistance, and hysteresis properties after curing is required.

Further, in recent years, it has been considered that the active energy ray-curable polyurethane resin is used as a molded resin in a 3D printer.

The molded resin for a 3D printer requires to have relatively low viscosity before curing, and also have excellent mechanical strength, weather resistance, and hysteresis properties after curing. However, the above-described polyurethane (meth)acrylate oligomer may not sufficiently satisfy these requirements.

The present invention provides an active energy ray-curable polyurethane resin having relatively low viscosity before curing, and also having excellent mechanical strength, weather resistance, and hysteresis properties after curing, a curable resin composition, and an active energy ray-curable polyurethane resin.

MEANS FOR SOLVING THE PROBLEM

The present invention [1] includes an active energy ray-curable polyurethane resin including a reaction product of a resin material containing an isocyanate group-terminated prepolymer and a hydroxy group-containing unsaturated compound, wherein the isocyanate group-terminated prepolymer includes a reaction product of a prepolymer material containing a polyisocyanate component containing a xylylene diisocyanate and/or a hydrogenated xylylene diisocyanate, and a polyol component containing a polyoxyalkylene polyol having a number average molecular weight of 6000 or more and 12000 or less, and the viscosity at 25°C of the active energy ray-curable polyurethane resin is 20000 mPa·s or more and 40000 mPa·s or less.

The present invention [2] includes a curable resin composition including the active energy ray-curable polyurethane resin described in the above-described [1] and a radical reactive diluent.

The present invention [3] includes the curable resin composition described in the above-described [2], wherein the radical reactive diluent includes a (meth)acrylate having an alicyclic ether skeleton.

The present invention [4] includes a production method for an active energy ray-curable polyurethan resin including a step of reacting a prepolymer material containing a polyisocyanate component containing a xylylene diisocyanate and/or a hydrogenated xylylene diisocyanate, and a polyol component containing a polyoxyalkylene polyol having a number average molecular weight of 6000 or more and 12000 or less to obtain an isocyanate group-terminated prepolymer; a step of purifying the isocyanate group-terminated prepolymer by distillation; and a step of reacting a resin material containing the purified isocyanate group-terminated prepolymer and a hydroxy group-containing unsaturated compound to obtain an active energy ray-curable polyurethane resin having the viscosity at 25°C of 20000 mPa·s or more and 40000 mPa·s or less.

EFFECT OF THE INVENTION

The active energy ray-curable polyurethane resin of the present invention includes a reaction product of an isocyanate group-terminated prepolymer and a hydroxy group-containing unsaturated compound. The isocyanate group-terminated prepolymer includes a reaction product of a polyisocyanate component containing a xylylene diisocyanate and/or a hydrogenated xylylene diisocyanate, and a polyol component containing a polyoxyalkylene polyol having a number average molecular weight within a predetermined range. The viscosity at 25°C of the active energy ray-curable polyurethane resin is 20000 mPa·s or more and 40000 mPa·s or less.

Therefore, the active energy ray-curable polyurethane resin of the present invention has relatively low viscosity before curing, and also has excellent mechanical strength, weather resistance, and hysteresis properties after curing.

Further, since the curable resin composition of the present invention contains the above-described active energy ray-curable polyurethane resin, it has relatively low viscosity before curing, and also has excellent mechanical strength, weather resistance, and hysteresis properties after curing.

Further, according to the active energy ray-curable polyurethane resin of the present invention, it is possible to efficiently produce the active energy ray-curable polyurethane resin having relatively low viscosity before curing, and also having excellent mechanical strength, weather resistance, and hysteresis properties after curing.

DESCRIPTION OF EMBODIMENTS

An active energy ray-curable polyurethane resin of the present invention is a polyurethane resin which is cured by irradiation with an active energy ray (described later).

The active energy ray-curable polyurethane resin includes a reaction product of a resin material.

The resin material contains an isocyanate group-terminated prepolymer and a hydroxy group-containing unsaturated compound.

The isocyanate group-terminated prepolymer is a polyurethane prepolymer having two or more free isocyanate groups at its molecular terminal, and includes a reaction product of a prepolymer material.

The prepolymer material includes a polyisocyanate component and a polyol component.

The polyisocyanate component includes, as an essential component, a xylylene diisocyanate and/or a hydrogenated xylylene diisocyanate.

Examples of the xylylene diisocyanate (XDI) include 1,2-xylylene diisocyanate (o-XDI), 1,3-xylylene diisocyanate (m-XDI), and 1,4-xylylene diisocyanate (p-XDI) as structural isomers.

These xylylene diisocyanates may be used alone or in combination of two or more. As the xylylene diisocyanate, preferably, a 1,3-xylylene diisocyanate and a 1,4-xylylene diisocyanate are used, more preferably, a 1,3-xylylene diisocyanate is used.

Examples of the hydrogenated xylylene diisocyanate (also known as bis(isocyanatomethyl)cyclohexane) ($H_6$XDI) include 1,2-hydrogenated xylylene diisocyanate (1,2-bis(isocyanatomethyl)cyclohexane, 1,2-$H_6$XDI), 1,3-hydrogenated xylylene diisocyanate (1,3-bis(isocyanatomethyl)cyclohexane, 1,3-$H_6$XDI), and 1,4-hydrogenated xylylene diisocyanate (1,4-bis(isocyanatomethyl)cyclohexane, 1,4-$H_6$XDI) as structural isomers.

These hydrogenated xylylene diisocyanates may be used alone or in combination of two or more. As the hydrogenated xylylene diisocyanate, preferably, a 1,3-hydrogenated xylylene diisocyanate and a 1,4-hydrogenated xylylene diisocyanate are used, more preferably, a 1,3-hydrogenated xylylene diisocyanate is used.

Also, examples of the xylylene diisocyanate and/or the hydrogenated xylylene diisocyanate include derivatives of the xylylene diisocyanate and/or the hydrogenated xylylene diisocyanate in addition to the above-described monomers.

Examples of the derivative of the xylylene diisocyanate and/or the hydrogenated xylylene diisocyanate include multimers (for example, dimers, trimers (for example, isocyanurate modified product, iminooxadiazine dione modified product), pentamers, heptamers, etc.), allophanate modified products (for example, allophanate modified product produced by a reaction of the xylylene diisocyanate and/or the hydrogenated xylylene diisocyanate with a known monohydric alcohol and/or a known dihydric alcohol etc.), polyol modified products (for example, polyol modified product (alcohol adduct) produced by a reaction of the xylylene diisocyanate and/or the hydrogenated xylylene diisocyanate with a known trihydric or more alcohol etc.), biuret modified products (for example, biuret modified product produced by a reaction of the xylylene diisocyanate and/or the hydrogenated xylylene diisocyanate with water or amines etc.), urea modified products (for example, urea modified product produced by a reaction of the xylylene diisocyanate and/or the hydrogenated xylylene diisocyanate with diamine etc.), oxadiazinetrione modified products (for example, oxadiazinetrione produced by a reaction of the xylylene diisocyanate and/or the hydrogenated xylylene diisocyanate with carbon dioxide etc.),

carbodiimide modified products (carbodiimide modified product produced by a decarboxylation condensation reaction of the xylylene diisocyanate and/or the hydrogenated xylylene diisocyanate etc.), uretdione modified products, and uretonimine modified products of the xylylene diisocyanate and/or the hydrogenated xylylene diisocyanate.

These derivatives may be used alone or in combination of two or more.

As the xylylene diisocyanate and/or the hydrogenated xylylene diisocyanate, preferably, a monomer of a xylylene diisocyanate and/or a hydrogenated xylylene diisocyanate is used, more preferably, a hydrogenated xylylene diisocyanate is used, further more preferably, a 1,3-hydrogenated xylylene diisocyanate is used.

Further, the polyisocyanate component may contain, as an optional component, another polyisocyanate (polyisocyanate excluding the xylylene diisocyanate and the hydrogenated xylylene diisocyanate).

Examples of the other polyisocyanate include aromatic polyisocyanates, araliphatic polyisocyanates (excluding the xylylene diisocyanate), aliphatic polyisocyanates, and alicyclic polyisocyanates (excluding the hydrogenated xylylene diisocyanate).

Examples of the aromatic polyisocyanate include aromatic diisocyanates such as tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, 1,5-naphthalene diisocyanate (NDI), diphenylmethane diisocyanate (4,4'-, 2,4'-, or 2,2'-diphenylmethane diisocyanate or a mixture thereof) (MDI), 4,4'-toluidine diisocyanate (TODI), and 4,4'-diphenylether diisocyanate.

Examples of the araliphatic polyisocyanate (excluding the xylylene diisocyanate) include araliphatic diisocyanates such as tetramethylxylylene diisocyanate (1,3- or 1,4-tetramethylxylylene diisocyanate or a mixture thereof) (TMXDI) and $\omega,\omega'$-diisocyanate-1,4-diethylbenzene.

Examples of the aliphatic polyisocyanate include aliphatic diisocyanates such as trimethylene diisocyanate, 1,2-propylene diisocyanate, butylene diisocyanate (tetramethylene diisocyanate, 1,2-butylene diisocyanate, 2,3-butylene diisocyanate, and 1,3-butylene diisocyanate), 1,5-pentamethylene diisocyanate (PDI), 1,6-hexamethylene diisocyanate (also known as hexamethylene diisocyanate) (HDI), 2,4,4-, or 2,2,4-trimethylhexamethylene diisocyanate, and 2,6-diisocyanate methylcaproate.

Examples of the alicyclic polyisocyanate (excluding the hydrogenated xylylene diisocyanate) include alicyclic diisocyanates such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (also known as isophorone diisocyanate) (IPDI), methylenebis(cyclohexyl isocyanate) (also known as bis(isocyanatocyclohexyl)methane) (4,4'-, 2,4'-, or 2,2'-methylenebis(cyclohexyl isocyanate), trans-trans isomers, trans-cis isomers, and cis-cis isomers of these, or a mixture of these) ($H_{12}$MDI), and methylcyclohexane diisocyanate (methyl-2,4-cyclohexane diisocyanate and methyl-2,6-cyclohexane diisocyanate), and norbomane diisocyanate (various isomers or a mixture of these) (NBDI). Preferably, 4,4'-methylenebis(cyclohexyl isocyanate) is used.

The other polyisocyanate includes the same derivative as the description above.

These other polyisocyanates may be used alone or in combination of two or more.

In addition, when the other polyisocyanate (polyisocyanate excluding the xylylene diisocyanate and the hydrogenated xylylene diisocyanate) is blended, a mixing ratio thereof is appropriately selected as long as it does not damage the excellent effect of the present invention.

More specifically, a content ratio of the xylylene diisocyanate and the hydrogenated xylylene diisocyanate (total amount of these when used in combination) is, for example, 50% by mass or more, preferably 60% by mass or more, more preferably 80% by mass or more, and usually 100% by mass or less with respect to the total amount of the polyisocyanate component.

The polyisocyanate component preferably consists of the xylylene diisocyanate and/or the hydrogenated xylylene diisocyanate, and more preferably, consists of the hydrogenated xylylene diisocyanate.

The polyol component contains, as an essential component, a polyoxyalkylene polyol.

The polyoxyalkylene polyol is, for example, an addition polymerization product of an alkylene oxide using a low molecular weight polyol or a low molecular weight polyamine as an initiator.

The low molecular weight polyol is a compound having a number average molecular weight of 40 or more and below 300 and having two or more hydroxy groups, and examples thereof include dihydric alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, alkane (C7 to C20) diol, 1,3- or 1,4-cyclohexanedimethanol and a mixture of these, 1,3- or 1,4-cyclohexanediol and a mixture of these, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerin, trimethylolpropane, and triisopropanolamine; tetrahydric alcohols such as tetramethylolmethane (pentaerythritol) and diglycerin; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

Examples of the low molecular weight polyamine include low molecular weight diamines such as ethylenediamine, 1,3-propanediamine, 1,3- or 1,4-butanediamine, 1,6-hexamethylenediamine, 1,4-cyclohexanediamine, 3-aminomethyl-3,5,5-trimethylcyclohexylamine (isophorone diamine), 4,4'-dicyclohexylmethanediamine, 2,5(2,6)-bis(aminomethyl)bicyclo[2.2.1]heptane, 1,3-bis(aminomethyl)cyclohexane, hydrazine, and o, m, or p-tolylenediamine (TDA, OTD); low molecular weight triamines such as diethylenetriamine; and low molecular weight polyamines having four or more amino groups such as triethylenetetramine and tetraethylenepentamine.

These initiators may be used alone or in combination of two or more. As the initiator, preferably, a low molecular weight polyol is used.

Examples of the alkylene oxide include ethylene oxide (IUPAC name: oxirane), propylene oxide (1,2-propylene oxide (IUPAC name: methyloxirane)), triethylene oxide (1,3-propylene oxide), and butylene oxide (1,2-butylene oxide (IUPAC name: ethyloxirane) and 2,3-butylene oxide (IUPAC name: 2,3-dimethyloxirane)). In addition, these alkylene oxides may be used alone or in combination of two or more. Further, among these, preferably, an ethylene oxide and a propylene oxide are used, more preferably, a propylene oxide is used.

Specific examples of the polyoxyalkylene polyol include polyalkylene oxides having average functionality of 2 such as polyoxyethylene glycol, polyoxypropylene glycol, polyoxytriethylene glycol, and polyoxyethylene-polyoxypropylene glycol (random or block copolymer) and polyalkylene oxides having average functionality of 3 such as polyoxyethylene triol, polyoxypropylene triol, polyoxytriethylene triol, and polyoxyethylene-polyoxypropylene triol (random or block copolymer).

These polyoxyalkylene polyols may be used alone or in combination of two or more.

As the polyoxyalkylene polyol, preferably, a polyoxypropylene polyol is used, more preferably, a polyoxypropylene glycol is used.

A number average molecular weight of the polyoxyalkylene polyol is, from the viewpoint of mechanical strength, weather resistance, and hysteresis properties, 6000 or more, preferably 7000 or more, more preferably 8000 or more, futher more preferably 9000 or more, particularly preferably 10000 or more, and 12000 or less, preferably 11500 or less, more preferably 11000 or less, further more preferably 10500 or less.

The average functionality of the polyoxyalkylene polyol is, for example, 1.5 or more, preferably 2 or more, and for example, 3 or less, preferably 2.5 or less, more preferably 2.0.

Further, the polyoxyalkylene polyol is produced by a known method using, for example, a hydroxide catalyst, a phosphazene catalyst, a bimetallic cyanide complex catalyst, or the like. From the viewpoint of suppressing a side reaction, the polyoxyalkylene polyol is preferably produced using a catalyst capable of suppressing the side reaction such as a phosphazene catalyst and a bimetallic cyanide complex catalyst.

In the side reaction in the production of the polyoxyalkylene polyol, a monool having an unsaturated bond is produced. Therefore, it is possible to evaluate a degree of suppression of the side reaction by calculating a degree of unsaturation (unit: meq./g) of the polyoxyalkylene polyol.

The degree of unsaturation (unit: meq./g) of the polyoxyalkylene polyol preferably satisfies the following formula (1).

$$\text{Degree of unsaturation} \leq 4 \times 10^{-5} \times (Mn/f)^{0.83} + 0.011$$

In the above-described formula (1), Mn indicates a number average molecular weight of the polyoxyalkylene polyol, and f indicates the average functionality (average number of hydroxyl groups) of the polyoxyalkylene polyol. Mn and f can be measured by a known method, and can be also calculated from, for example, a hydroxyl value measured in conformity with JIS K1557-1 (2007) (hereinafter, the same).

More specifically, the degree of unsaturation (unit: meq./g) of the polyoxyalkylene polyol is, for example, 0.001 or more, and for example, 0.07 or less, preferably 0.05 or less, more preferably 0.03 or less, further more preferably 0.025 or less.

The hydroxyl value of the polyoxyalkylene polyol is, for example, 9 mgKOH/g or more, preferably 10 mgKOH/g or more, and for example, 20 mgKOH/g or less, preferably 15 mgKOH/g or less.

The polyol component may include, as an optional component, another high molecular weight polyol (high molecular weight polyol excluding the polyoxyethylene glycol).

The other high molecular weight polyol is a compound having a number average molecular weight of 300 or more and 20000 or less and having two or more hydroxy groups. Examples thereof include polyether polyols (excluding the polyoxyalkylene polyol), polyester polyols, polycarbonate polyols, polyurethane polyols, epoxy polyols, vegetable oil polyols, polyolefin polyols, silicone polyols, and fluorine polyols. These may be used alone or in combination of two or more. As the other high molecular weight polyol, preferably, a polyether polyol (excluding the polyoxyalkylene polyol), a polyester polyol, a polycarbonate polyol, and a polyurethane polyol are used.

Further, the polyol component may contain, as an optional component, a low molecular weight polyol.

Examples of the low molecular weight polyol include the above-described low molecular weight polyols.

When the polyol component includes the low molecular weight polyol, a content ratio thereof is appropriately set as long as it does not damage the excellent effect of the present invention.

Preferably, the polyol component does not include the low molecular weight polyol, and includes only the high molecular weight polyol. More preferably, the polyol component includes only the polyoxyalkylene polyol.

A number average molecular weight of the polyol component (total amount) is, for example, 6000 or more, preferably 7000 or more, more preferably 8000 or more, further more preferably 9000 or more, particularly preferably 10000 or more, and for example, 12000 or less, preferably 11500 or less, more preferably 11000 or less, further more preferably 10500 or less.

Further, the average functionality of the polyol component (total amount) is, for example, 1.5 or more, preferably 2 or more, and for example, 3 or less, preferably 2.5 or less, more preferably 2.0.

Further, a hydroxyl value of the polyol component (total amount) is, for example, 9 mgKOH/g or more, preferably 10 mgKOH/g or more, and for example, 20 mgKOH/g or less, preferably 15 mgKOH/g or less.

The isocyanate group-terminated prepolymer can be obtained by reacting a prepolymer material containing the above-described polyisocyanate component and the above-described polyol component by a known method.

More specifically, in this method, in an equivalent ratio (isocyanate group/hydroxy group) of isocyanate groups in the polyisocyanate component to hydroxy groups in the polyol component, the prepolymer material is blended at a ratio of above 1. The equivalent ratio (isocyanate group/hydroxy group) in the prepolymer material is preferably 1.1 or more, more preferably 3 or more, further more preferably 6 or more, and preferably 20, more preferably 15 or less, further more preferably 10 or less.

Then, the above-described prepolymer material is reacted by a known polymerization method such as bulk polymerization and solution polymerization. Preferably, the above-described prepolymer material is reacted by bulk polymerization.

In the bulk polymerization, for example, the above-described prepolymer material is blended under a nitrogen atmosphere, and reacted at a reaction temperature of 75 to 85°C for about 1 to 20 hours.

In the solution polymerization, for example, the above-described prepolymer material is blended into a known organic solvent under a nitrogen atmosphere, and reacted at a reaction temperature of 20 to 80°C for about 1 to 20 hours.

In addition, in the above-described polymerization, if necessary, a known urethanization catalyst may be added.

An addition ratio of the urethanization catalyst addition is appropriately set in accordance with its purpose and application.

Thus, the isocyanate group-terminated prepolymer can be obtained, and as a result, a composition containing the isocyanate group-terminated prepolymer and an unreacted polyisocyanate component (hereinafter, a prepolymer crude product) is obtained.

The average functionality of the isocyanate group of the isocyanate group-terminated prepolymer is, for example, 1.5 or more, preferably 2.0 or more, and for example, 3.0 or less, preferably 2.5 or less.

Further, the isocyanate group concentration of the prepolymer crude product (including the isocyanate group-terminated prepolymer and the unreacted polyisocyanate component) is, for example, 0.3% by mass or more, preferably 0.5% by mass or more, more preferably 1.0% by mass or more, and for example, 15% by mass or less, preferably 12% by mass or less, more preferably 10% by mass or less with respect to the total amount (in terms of solid content) of the prepolymer crude product.

Further, the prepolymer crude product (including the isocyanate group-terminated prepolymer and the unreacted polyisocyanate component) is preferably purified by distillation from the viewpoint of adjusting the viscosity at 25°C of the active energy ray-curable polyurethane resin within a range to be described later, and improving handling properties and moldability.

It is also possible to adjust the viscosity at 25°C of the active energy ray-curable polyurethane resin within a range to be described later by, for example, setting the equivalent ratio (isocyanate group/hydroxy group) in the prepolymer material relatively low without purifying the prepolymer crude product. However, in such a case, the handling properties and the moldability may not be sufficient.

Therefore, from the viewpoint of improving the handling properties and the moldability, preferably, the prepolymer crude product is purified by distillation, and the viscosity at 25°C of the active energy ray-curable polyurethane resin is adjusted within a range to be described later.

A distillation method is not particularly limited, and examples thereof include a batch distillation method and a continuous distillation method. An example of the continuous distillation method includes a thin film distillation method (Smith-type thin film distillation method). As the distillation method, preferably, a thin film distillation method (Smith-type thin film distillation method) is used.

When the thin film distillation method is used, as the distillation conditions, a distillation temperature is, for example, 120°C or more, preferably 150°C or more, and for example, 250°C or less, preferably 200°C or less. Further, the distillation pressure (absolute pressure) is, for example, 1 Pa or more, preferably 10 Pa or more, more preferably 50 Pa or more, and for example, 300 Pa or less, preferably 200 Pa or less, more preferably 100 Pa or less.

Further, a feed amount of the isocyanate group-terminated prepolymer is, for example, 0.1 g/min or more, preferably 1.0 g/min or more, more preferably 2.0 g/min or more, and for example, 100 g/min or less, preferably 50 g/min or less, more preferably 10 g/min or less.

Thus, an unreacted polyisocyanate component is removed from the prepolymer crude product, and a purified product of the isocyanate group-terminated prepolymer (hereinafter, a prepolymer purified product) is obtained.

The prepolymer purified product consists of the isocyanate group-terminated prepolymer or contains the isocyanate group-terminated prepolymer and an extremely trace amount (10000 ppm or less) of unreacted polyisocyanate component.

In the prepolymer purified product, a content ratio of the isocyanate group-terminated prepolymer is, for example, 99.5% by mass or more, preferably 99.9% by mass or more, and for example, 100% by mass or less with respect to the total amount of the prepolymer purified product.

Further, the isocyanate group concentration of the prepolymer purified product is, for example, 0.0001% by mass or more, preferably 0.0005% by mass or more, and for example, 0.020% by mass or less, preferably 0.013% by mass or less, more preferably 0.010% by mass or less with respect to the total amount (in terms of solid content) of the prepolymer purified product.

Then, the active energy ray-curable polyurethane resin is obtained by a reaction of the above-described isocyanate group-terminated prepolymer (preferably, the prepolymer purified product) and the hydroxy group-containing unsaturated compound.

The hydroxy group-containing unsaturated compound is a compound having one or more ethylenically unsaturated groups, and one or more hydroxy groups in combination.

More specifically, the hydroxy group-containing unsaturated compound has, for example, one or more ethylenically unsaturated group-containing groups such as a (meth)acryloyl group, a vinylphenyl group, a propenyl ether group, an allyl ether group, and a vinyl ether group, and one or more hydroxy groups in combination.

(Meth)acryloyl represents acryloyl and/or methacryloyl, similarly, (meth)acryl represents acrylic and/or methacryl, and (meth)acrylate represents acrylate and/or methacrylate.

As the ethylenically unsaturated group-containing group, preferably, a (meth)acryloyl group is used, more preferably, an acryloyl group is used.

When the ethylenically unsaturated group-containing group is the (meth)acryloyl group, an example of the hydroxy group-containing unsaturated compound includes a hydroxy group-containing (meth)acrylate.

Examples of the hydroxy group-containing (meth)acrylate include a monohydroxyl mono(meth)acrylate having one hydroxy group and having one (meth)acryloyl group in one molecule, a polyhydroxyl mono(meth)acrylate having a plurality of hydroxy groups and one (meth)acryloyl group in one molecule, a monohydroxyl poly(meth)acrylate having one hydroxy group and a plurality of (meth)acryloyl groups in one molecule, and a polyhydroxyl poly(meth)acrylate having a plurality of hydroxy groups and a plurality of (meth)acryloyl groups in one molecule.

Examples of the monohydroxyl mono(meth)acrylate include hydroxyalkyl (meth)acrylates such as 2-hydroxylethyl (meth)acrylate, 2-hydroxypropyl (meth)acrylate, 4-hydroxylbutyl (meth)acrylate, 2-hydroxybutyl (meth)acrylate, 2-phenoxypropyl (meth)acrylate, and 4-hydroxycyclohexyl (meth)acrylate; 3-chloro-2-hydroxypropyl (meth)acrylate; 2-hydroxy-3-phenyloxypropyl (meth)acrylate; 2-(meth)acryloyloxyethyl-2-hydroxyethylphthalate; 2-hydroxyalkyl (meth)acryloylphosphate; pentanediol mono(meth)acrylate; neopentyl glycol mono(meth)acrylate; polyethylene glycol mono(meth)acrylate; and polypropylene glycol mono(meth)acrylate.

Examples of the polyhydroxyl mono(meth)acrylate include trimethylolpropane mono(meth)acrylate, glycerin mono(meth)acrylate, and pentaerythritol mono(meth)acrylate.

Examples of the monohydroxyl poly(meth)acrylate include trimethylolpropane di(meth)acrylate, glycerin di(meth)acrylate, pentaerythritol tri(meth)acrylate, dipentaerythritol penta(meth)acrylate, and 2-hydroxy-3-(meth)acryloyloxypropyl(meth)acrylate (for example, 2-hydroxy-3-acryloyloxypropyl methacrylate (trade name: NK ESTER 701A, manufactured by SHIN-NAKAMURA CHEMICAL CO., LTD.)).

Examples of the polyhydroxyl poly(meth)acrylate include pentaerythritol di(meth)acrylate, dipentaerythritol tri(meth)acrylate, and dipentaerythritol tetra(meth)acrylate.

In addition, when the ethylenically unsaturated group-containing group is a vinylphenyl group, examples of the hydroxy group-containing unsaturated compound include 4-vinylphenol, 2-hydroxylethyl-4-vinylphenyl ether, (2-hydroxypropyl)-4-vinylphenyl ether, (2,3-dihydroxypropyl)-4-vinylphenyl ether, and 4-(2-hydroxylethyl)styrene.

In addition, when the ethylenically unsaturated group-containing group is a propenyl ether group, examples of the hydroxy group-containing unsaturated compound include propenyl alcohol, 2-hydroxyethylpropenyl ether, and 2,3-dihydroxypropylpropenyl ether.

In addition, when the ethylenically unsaturated group-containing group is an allyl ether group, examples of the hydroxy group-containing unsaturated compound include allyl alcohol, 2-hydroxyethylallyl ether, and 2-hydroxypropylallyl alcohol.

In addition, when the ethylenically unsaturated group-containing group is a vinyl ether group, examples of the hydroxy group-containing unsaturated compound include 2-hydroxyethylvinyl ether and 2-hydroxypropylvinyl ether.

These hydroxy group-containing unsaturated compounds may be used alone or in combination of two or more.

As the hydroxy group-containing unsaturated compound, preferably, a hydroxy group-containing (meth)acrylate is used, more preferably, a monohydroxyl mono(meth)acrylate and a monohydroxyl poly(meth)acrylate are used, further more preferably, a monohydroxyl mono(meth)acrylate is used, even more preferably, a hydroxyalkyl (meth)acrylate is used, particularly preferably, a 2-hydroxylethyl (meth)acrylate is used.

Then, in the reaction of the isocyanate group-terminated prepolymer (preferably, the purified isocyanate group-terminated prepolymer) with the hydroxy group-containing unsaturated compound, for example, the above-described isocyanate group-terminated prepolymer and the hydroxy group-containing unsaturated compound are blended under an inert gas atmosphere so as to have a predetermined equivalent ratio, and subjected to a urethanization reaction.

An equivalent ratio (isocyanate group/hydroxy group) of isocyanate groups in the isocyanate group-terminated prepolymer to hydroxy groups in the hydroxy group-containing unsaturated compound is, for example, 0.7 or more, preferably 0.9 or more, and for example, 1.5 or less, preferably 1.2 or less.

In addition, though the reaction conditions are not particularly limited, a reaction temperature is, for example, 40°C or more, preferably 50°C or more, more preferably 60°C or more, and for example, 120°C or less, preferably 100°C or less, more preferably 80°C or less. Further, the reaction time is, for example, 0.5 hours or more, preferably 1.0 hour or more, and for example, 24 hours or less, preferably 10 hours or less.

In addition, in the above-described reaction, if necessary, a known urethanization catalyst may be added. An addition ratio of the urethanization catalyst is appropriately set in accordance with its purpose and application.

Thus, the active energy ray-curable polyurethane resin including the reaction product of the isocyanate group-terminated prepolymer and the hydroxy group-containing unsaturated compound is obtained.

More specifically, the active energy ray-curable polyurethane resin is a polyurethane resin obtained by subjecting the isocyanate group of the isocyanate group-terminated prepolymer and the hydroxy group of the hydroxy group-containing unsaturated compound to the urethanization reaction, and having an unsaturated bond derived from the hydroxy group-containing unsaturated compound.

The active energy ray-curable polyurethane resin may further contain, if necessary, a known additive at an appropriate ratio. Examples thereof include plasticizers, anti-blocking agents, heat resistant stabilizers, active energy ray resistant stabilizers (light resistant stabilizer etc.), antioxidants, mold release agents, catalysts, pigments, dyes, lubricants, fillers, and hydrolysis inhibitors. An addition amount of these additives and the timing of addition are appropriately set in accordance with its purpose and application.

Then, a number average molecular weight (molecular weight in terms of standard polystyrene by GPC measurement) of the active energy ray-curable polyurethane resin is, for example, 5000 or more, preferably 7000 or more, and for example, 12000 or less, preferably 11000 or less.

In addition, the viscosity at 25°C of the active energy ray-curable polyurethane resin is, from the viewpoint of tensile strength of a cured product to be obtained, 20000 mPa·s or more, preferably 22000 mPa·s or more, more preferably 24000 mPa·s or more, further more preferably 26000 mPa·s or more, and from the viewpoint of handling properties, 40000 mPa·s or less, preferably 38000 mPa·s or less, more preferably 36000 mPa·s or less, further more preferably 34000 mPa·s or less, particularly preferably 32000 mPa·s or less.

When the viscosity is within the above-described range, it is possible to improve the handling properties at the time of molding.

The viscosity of the active energy ray-curable polyurethane resin is adjusted by purification of the isocyanate group-terminated prepolymer or the like.

In addition, the viscosity at 25°C of the active energy ray-curable polyurethane resin is measured with an E-type viscometer in conformity with Examples to be described later.

Then, according to the above-described production method for an active energy ray-curable polyurethane resin, it is possible to efficiently produce the active energy ray-curable polyurethane resin having relatively low viscosity before curing, and also having excellent mechanical strength, weather resistance, and hysteresis properties after curing.

In other words, the above-described active energy ray-curable polyurethane resin includes the reaction product of the isocyanate group-terminated prepolymer and the hydroxy group-containing unsaturated compound. The isocyanate group-terminated prepolymer includes the reaction product of the polyisocyanate component containing the xylylene diisocyanate and/or the hydrogenated xylylene diisocyanate, and the polyol component containing the polyoxyalkylene polyol having a number average molecular weight within a predetermined range. The viscosity at 25°C of the active energy ray-curable polyurethane resin is 20000 mPa·s or more and 40000 mPa·s or less.

Therefore, the above-described active energy ray-curable polyurethane resin has relatively low viscosity before curing, and also has excellent mechanical strength, weather resistance, and hysteresis properties after curing.

Such an active energy ray-curable polyurethane resin can be used in various industrial fields. More specifically, the active energy ray-curable polyurethane resin can be used as, for example, an adhesive, a coating agent, an elastomer, a molding material, or the like. The active energy ray-curable polyurethane resin is preferably used as a molding material.

In addition, when the active energy ray-curable polyurethane resin is used as a molding material, it is preferably used as a mixture (curable resin composition) with a radical reactive diluent. In such a case, the active energy ray-curable polyurethane resin may be circulated alone, and thereafter, mixed with the radical reactive diluent, or may be also circulated as a mixture of the active energy ray-curable polyurethane resin and the radical reactive diluent.

In the present invention, the curable resin composition contains the above-described active energy ray-curable polyurethane resin and the radical reactive diluent.

The radical reactive diluent is a compound which is radically polymerized by irradiation with an active energy ray (described later), and is also a diluent for diluting the above-described active energy ray-curable polyurethane resin.

Examples of the radical reactive diluent include a reactive compound having an aromatic hydrocarbon skeleton, a reactive compound having an alicyclic hydrocarbon skeleton, a reactive compound having a chain-like ether skeleton, a reactive compound having an alicyclic ether skeleton, a reactive compound having an amide skeleton, a reactive compound having an oxyalkylene skeleton, a compound having a (meth)acryloyl group and a vinyl group in combination, a poly(meth)acrylate, an unsaturated carboxylic acid allyl ester, and the above-described hydroxy group-containing (meth)acrylate.

Examples of the reactive compound having an aromatic hydrocarbon skeleton include (meth)acrylates having an aromatic hydrocarbon skeleton such as 3-phenoxybenzyl (meth)acrylate; styrene; vinyltoluene; divinylbenzene; and α-methylstyrene.

Examples of the reactive compound having an alicyclic hydrocarbon skeleton include (meth)acrylates having an alicyclic hydrocarbon skeleton such as isobornyl (meth)acrylate, 3,3,5-trimethylcyclohexyl (meth)acrylate, 4-tert-butylcyclohexyl (meth)acrylate, and dicyclopentanyl (meth)acrylate.

An example of the reactive compound having a chain-like ether skeleton includes 2-ethylhexyl-diglycol (meth)acrylate.

Examples of the reactive compound having an alicyclic ether skeleton include (meth)acrylates having an alicyclic ether skeleton such as cyclic trimethylolpropane formal (meth)acrylate and (2-methyl-2-ethyl-1,3-dioxolane-4-yl) methyl(meth)acrylate, and 4-(meth)acryloylmorpholine.

An example of the reactive compound having an amide skeleton includes N,N-diethyl (meth)acrylamide.

An example of the reactive compound having an oxyalkylene skeleton includes 2-ethylhexyl-diglycol (meth)acrylate.

Examples of the compound having a (meth)acryloyl group and a vinyl group in combination include 2-(allyloxymethyl) methyl acrylate, 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, p-vinyloxymethylphenylmethyl (meth)acrylate, 2-(vinyloxyethoxy)ethyl (meth)acrylate, and 2-(vinyloxyethoxyethoxy)ethyl (meth)acrylate.

Examples of the polyol poly(meth)acrylate include polyol di(meth)acrylates such as ethylene glycol di(meth)acrylate, propylene glycol di(meth)acrylate, butylene glycol di(meth)acrylate, pentanediol di(meth)acrylate, neopentyl glycol di(meth)acrylate, hexanediol di(meth)acrylate, nonanediol di(meth)acrylate, and oligoethylene glycol di(meth)acrylate; polyol tri(meth)acrylates such as trimethylolpropane tri(meth)acrylate and glycerin tri(meth)acrylate; pentaerythritol tetra(meth)acrylate; and dipentaerythritol hexa(meth)acrylate.

Examples of the unsaturated carboxylic acid allyl ester include allyl (meth)acrylate, diallyl maleate, diallyl fumarate, and diallyl itaconate.

These radical reactive diluents may be used alone or in combination of two or more.

As the radical reactive diluent, from the viewpoint of improving mechanical strength, weather resistance, and hysteresis properties, preferably, a reactive compound having an alicyclic ether skeleton is used, more preferably, a (meth)acrylate having an alicyclic ether skeleton is used, further more preferably, a cyclic trimethylolpropane formal (meth)acrylate and (2-methyl-2-ethyl-1,3-dioxolane-4-yl) methyl(meth)acrylate are used, particularly preferably, (2-methyl-2-ethyl-1,3-dioxolane-4-yl) methyl(meth)acrylate is used.

In the curable resin composition, a mixing ratio of the active energy ray-curable polyurethane resin to the radical reactive diluent is not particularly limited, and is appropriately set in accordance with its purpose and application as long as it does not damage the excellent effect of the present invention.

More specifically, a ratio of the active energy ray-curable polyurethane resin is, for example, 40 parts by mass or more, preferably 45 parts by mass or more, and for example, 70 parts by mass or less, preferably 65 parts by mass or less with respect to 100 parts by mass of the total amount of the active energy ray-curable polyurethane resin and the radical reactive diluent. Further, a ratio of the radical reactive diluent is, for example, 30 parts by mass or more, preferably 35 parts by mass or more, and for example, 60 parts by mass or less, preferably 55 parts by mass or less.

Further, as the radical reactive diluent, preferably, a reactive compound having an alicyclic ether skeleton and a compound having a (meth)acryloyl group and a vinyl group in combination are used in combination. When these are used in combination, a ratio of the reactive compound having an alicyclic ether skeleton is, for example, 40 parts by mass or more, preferably 45 parts by mass or more, and for example, 99 parts by mass or less, preferably 95 parts by mass or less with respect to 100 parts by mass of the total amount of the reactive compound having an alicyclic ether skeleton and the compound having a (meth)acryloyl group and a vinyl group in combination. Further, a ratio of the compound having a (meth)acryloyl group and a vinyl group in combination is, for example, 1 part by mass or more, preferably 5 parts by mass or more, and for example, 60 parts by mass or less, preferably 55 parts by mass or less.

A method for mixing the active energy ray-curable polyurethane resin with the radical reactive diluent is not particularly limited, and a known method is used. Thus, the curable resin composition is obtained.

Further, if necessary, the curable resin composition may contain a photopolymerization initiator.

Examples of the photopolymerization initiator include known photopolymerization initiators such as diphenyl(2,4,6-trimethylbenzoyl)phosphine oxide, bis(2,4,6-trimethylbenzoyl)phenylphosphine oxide, 2-benzyl-2-(dimethylamino)-4'-morpholinobutyrophenone, 1,2-octanedion 1-[4-(phenylthio)phenyl]-2-(o-benzoyloxime), ethanone-1-[9-ethyl-6-(2-methylbenzoyl)-9H-carbazole-3-yl]-1-(O-acetyloxime), 1-hydroxycyclohexyl-phenylketone, and 2-hydroxy-2-methyl-1-phenylpropanone.

Further, the photopolymerization initiator is available as a commercially available product. Examples of the commercially available product thereof include TPO (trade name, manufactured by TOKYO CHEMICAL INDUSTRY CO., LTD.), Irgacure819 (BAPO, trade name, manufactured by BASF SE), Irgacure369 (Omnirad369, trade name, manufactured by BASF SE), IrgacureOXE01 (trade name, manufactured by BASF SE), IrgacureOXE02 (trade name, manufactured by BASF SE), IrgacureOXE03 (trade name, manufactured by BASF SE), IrgacureOXE04 (trade name, manufactured by BASF SE), Irgacure184 (Omnirad184, trade name, manufactured by BASF SE), Omnirad1173 (Darocur1173, trade name, manufactured by BASF SE), NCI-831 (trade name, manufactured by ADEKA CORPORATION), and NCI-930 (trade name, manufactured by ADEKA CORPORATION). These may be used alone or in combination of two or more.

An addition amount of the photopolymerization initiator is not particularly limited, and is appropriately set in accordance with its purpose and application.

Furthermore, if necessary, the curable resin composition may also contain a known sensitizer or the like in order to accelerate a photopolymerization reaction by the photopolymerization initiator.

Examples of the sensitizer include 9,10-bis(octanoyloxy)anthracene, 9,10-dibutoxyanthracene, and 1,4-diethoxynaphthalene. These may be used alone or in combination of two or more.

Further, the sensitizer is also available as a commercially available product. Examples of the commercially available product thereof include ANTHRACURE UVS-581 (trade name, manufactured by KAWASAKI KASEI CHEMICALS LTD.), ANTHRACURE UVS-1331 (trade name, manufactured by KAWASAKI KASEI CHEMICALS LTD.), and ANTHRACURE UVS-2171 (trade name, manufactured by KAWASAKI KASEI CHEMICALS LTD.).

In addition, if necessary, the curable resin composition may contain a known additive at an appropriate ratio. Examples thereof include antioxidants, ultraviolet absorbers, and fluorescent whitening agents, furthermore, plasticizers, anti-blocking agents, heat resistant stabilizers, active energy ray resistant stabilizers (light resistant stabilizers etc.), mold release agents, catalysts, pigments, dyes, lubricants, fillers, and hydrolysis inhibitors. An addition amount of these additives and the timing of addition are appropriately set in accordance with its purpose and application.

Examples of the antioxidant include hindered phenol compounds (specifically, Irganox 1135, Iganox 245, Irganox 1076, Irganox 1726, and Irganox 1520L, all are manufactured by BASF SE, and specifically, ADK STAB AO-80 manufactured by ADEKA CORPORATION), organic phosphorus compounds (specifically, JP-302, JP-308, JP-308E, JP-310, JP-312L, JP-333E, JP-3180, JPS-312, JPP-13R, and JP-318E, all are manufactured by Johoku Chemical Co., Ltd.; specifically, IRGAFOS 38 and IRGAFOS P-EPQ, all are manufactured by BASF SE; and specifically, ADK STAB PEP-4C, ADK STAB PEP-8, ADK STAB 1500, and ADK STAB 3010, all are manufactured by ADEKA CORPORATION), thioether-based compounds (specifically IRGANOX PS800FL and IRGANOX PS802FL, all are manufactured by BASF SE; specifically, ADK STAB AO-412S and ADK STAB AO-503, all are manufactured by ADEKA CORPORATION; and specifically, Yoshitomi DLTP, Yoshitomi DSTP, and Yoshitomi DMTP, all are manufactured by API CORPORATION), and hydroxylamine-based compounds (specifically, IRGASTAB FS042, manufactured by BASF SE). These may be used alone or in combination of two or more. An addition amount of the antioxidant and the timing of addition are appropriately set in accordance with its purpose and application.

Examples of the ultraviolet absorber include benzotriazole-based ultraviolet absorbers such as 2-(5-methyl-2-hydroxyphenyl)benzotriazole, 2,2-hydroxy-3,5-bis($\alpha,\alpha$-dimethylbenzyl)phenyl, 2-(2'-hydroxy-5'-methyl-phenyl)benzotriazole, 2-(2'-hydroxy-3',5'-di-t-butyl-phenyl)benzotriazole, 2-(2'-hydroxy-3'-t-butyl-5'-methyl-phenyl)-5-chloro-benzotriazole, 2-(2'-hydroxy-3',5'-di-t-butyl-phenyl)-5-chloro-benzotriazole, and 2-(2'-hydroxy-4'-n-octoxy-phenyl)benzotriazole; benzophenone-based ultraviolet absorbers such as 2,4-dihydroxy-benzophenone, 2-hydroxy-4-methoxy-benzophenone, 2,2'-dihydroxy-4-methoxy-benzophenone, 2,2'-dihydroxy-4,4'-dimethoxy-benzophenone, 2,2'-dihydroxy-4,4'-dimethoxy-5-sulfonebenzophenone, 2-hydroxy-4-methoxy-2'-carboxy-benzophenone, 2-hydroxy-4-methoxy-5-sulfobenzophenone-trihydrate, 2-hydroxy-4-n-octoxy-benzophenone, 2-hydroxy-4-octadecyloxy-benzophenone, 2-hydroxy-4-n-dodecyloxy-benzophenone, 2-hydroxy-4-benzyloxybenzophenone, 2,2',4,4' -tetrahydroxy-benzophenone, 2-hydroxy-4-dodecyloxy-benzophenone, and 2-hydroxy-4-(2-hydroxy-3-methacryloxy)propoxybenzophenone; and cyano acrylate-based ultraviolet absorbers such as 2'-ethylhexyl-2-cyano-3,3-diphenylacrylate and ethyl-2-cyano-3-(3',4'-methylenedioxyphenyl)-acrylate. Examples of the commercially available product thereof include Tinuvin328 and TinuvinPS (manufactured by Ciba-Geigy Ltd.), SEESORB709 (manufactured by Shiraishi Calcium Kaisha, Ltd.), Uvinul490 (manufactured by GAF), Permyl B-100 (manufactured by Ferro Corporation), and Uvinul3035, Uvinul3039, and Uvinul3030 (manufactured by BASF SE). These may be used alone or in combination of two or more. An addition amount of the ultraviolet absorber and the timing of addition are appropriately set in accordance with its purpose and application.

Examples of the fluorescent whitening agent include 7-(dimethylamino)-4-methylcoumarin, 2,5-bis(5-tert-butyl-2-benzoxazolyl)thiophene, and 4,4'-bis(2-benzoxazolyl)stilbene. Further, an example of a commercially available product thereof includes TINOPAL OB (manufactured by BASF SE). These may be used alone or in combination of two or more. An addition amount of the fluorescent whitening agent and the timing of addition are appropriately set in accordance with its purpose and application.

Then, since such a curable resin composition contains the above-described active energy ray-curable polyurethane resin, it has relatively low viscosity before curing, and also has excellent mechanical strength, weather resistance, and hysteresis properties after curing.

Therefore, the above-described active energy ray-curable polyurethane resin and the above-described curable resin composition are preferably used as, for example, an adhesive, a coating agent, an elastomer, and a molding material in various industrial fields. In particular, the above-described active energy ray-curable polyurethane resin and the above-described curable resin composition are preferably used as a molding material, more specifically, a molding material for a 3D printer.

In order to obtain a molded product (cured product) of the curable resin composition, for example, the curable resin composition is molded into a desired shape, and then, irradiated with an active energy ray, thereby curing the curable resin composition.

Examples of the active energy ray include ultraviolet ray and electron beam. An irradiation amount (integrated light amount) of the active energy ray is, for example, $10\times10^{-3}$ J/cm$^2$ or more, preferably $15\times10^{-3}$ J/cm$^2$ or more, and for example, 6 J/cm$^2$ or less, preferably 5 J/cm$^2$ or less.

The curing by the active energy ray may be batch curing or split curing. In other words, the curable resin composition may be cured by one time of irradiation with the active energy ray, or the curable resin composition may be cured by two or more times of irradiation with the active energy ray.

Thus, the molded product (cured product) made of the curable resin composition is obtained.

Or, if necessary, the curable resin composition may be cured after irradiation with the active energy ray.

The curing conditions are not particularly limited, and the temperature conditions are, for example, 10 to 150°C, preferably 10 to 100°C. Also, the humidity conditions are, for example, 20 to 80%, preferably 30 to 70%. Also, the curing time is, for example, 0.5 to 10 days, preferably 1 to 7 days.

Thus, the molded product (cured product) made of the curable resin composition is obtained.

Since the obtained molded product (cured product) is obtained using the above-described active energy ray-curable polyurethane resin having relatively low viscosity before curing, it has excellent productivity, and also has excellent mechanical strength, weather resistance, and hysteresis properties.

Examples

Next, the present invention is described based on Examples and Comparative Examples. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

Examples 1 to 15 and Comparative Examples 1 to 11

(1) Synthesis of Isocyanate Group-Terminated Prepolymer

An isocyanate group-terminated prepolymer was synthesized in accordance with the formulation described in Tables 1 to 5.

More specifically, a polyol component was charged into a separable flask made of glass under a nitrogen atmosphere in accordance with the formulation described in Tables 1 to 5, next, the polyisocyanate component was charged thereto at an equivalent ratio (NCO/OH) described in Tables 1 to 5, and then, the temperature thereof was increased to 80°C.

Thereafter, STANOCT (tin 2-ethylhexanoate) as a urethanization catalyst was charged into the mixture at a ratio of 10 ppm, and reacted for four hours. Thus, a crude product containing the isocyanate group-terminated prepolymer and an unreacted polyisocyanate component was obtained.

(2) Purification of Isocyanate-Group Terminated Prepolymer

The crude product containing the isocyanate group-terminated prepolymer was set in a Smith-type thin film distillation device, and the isocyanate group-terminated prepolymer and the unreacted polyisocyanate component were separated under the following conditions, thereby purifying the isocyanate group-terminated prepolymer.

Temperature conditions: 160 to 170°C

Pressure conditions: 70 to 100 Pa

Supply flow rate: 3.5 to 4 g/min

In Comparative Example 4, thin film distillation was not carried out.

(3) Synthesis of Active Energy Ray-Curable Polyurethane Resin

The purified isocyanate group-terminated prepolymer (prepolymer purified product) was charged into a separable flask under the atmosphere (under the dry air) in accordance with the formulation described in Tables 1 to 5, and next, a hydroxy group-containing unsaturated compound was charged at a ratio at which an equivalent ratio (NCO/OH) of isocyanate groups of the isocyanate group-terminated prepolymer to hydroxy groups of the hydroxy group-containing unsaturated compound was 1.0, and the temperature thereof was increased to 70°C.

Thereafter, STANOCT (tin 2-ethylhexanoate) as a urethanization catalyst was charged so that the amount of STANOCT with respect to the isocyanate group-terminated prepolymer was 200 ppm, and the isocyanate group-terminated prepolymer and the hydroxy group-containing unsaturated compound reacted for four hours until the isocyanate group concentration reached 0.01% or less.

Thus, the active energy ray-curable polyurethane resin was obtained.

Further, the viscosity at 25°C of the obtained active energy ray-curable polyurethane resin was measured with an E-type viscometer (manufactured by TOKI SANGYO CO., LTD., TV25-type viscometer, rotor angle of 1°34', and rotor radius of 2.4 cm).

(4) Preparation of Curable Resin Composition

In accordance with the formulation described in Tables 1 to 5, the active energy ray-curable polyurethane resin, a radical reactive diluent, a photopolymerization initiator, and an additive were charged into a brown bottle so as to have a total of 100 g to be stirred at 60°C.

Thus, a curable resin composition was obtained.

The viscosity at 25°C of the obtained curable resin composition was measured with an E-type viscometer (manufactured by TOKI SANGYO CO., LTD., TV25-type viscometer, rotor angle of 1°34', and rotor radius of 2.4 cm).

Since the active energy ray-curable polyurethane resin of Comparative Examples 3, 4, and 6 had high viscosity, it could not be mixed with the radical reactive diluent, and the curable resin composition could not be prepared.

(5) Curing of Curable Resin Composition

The curable resin composition was cured by the method described in Tables 1 to 5, thereby obtaining a molded product (cured product).

The curing conditions in each method are shown below.

(a) UV

A curable resin composition (26 g) was poured into a mold (100×100×20 mm) made of polypropylene. Then, one surface of the curable resin composition was irradiated with UV for three minutes under a nitrogen atmosphere with a UV irradiator (M UVBA-0.3×0.4×0.5UV405-J, manufactured by Aitec System Co., Ltd.). Thereafter, a cured product of the curable resin composition was removed from the mold, and further, the other surface was irradiated with UV for three minutes.

(b) High-Pressure Mercury Vapor Lamp

A curable resin composition (26 g) was poured into a mold (100×100×20 mm) made of polypropylene. Then, only one surface of the curable resin composition was irradiated with an active energy ray with a high-pressure mercury vapor lamp (high-pressure mercury lamp (customized product), manufactured by Heraeus Holding GmbH).

The illuminance was set at 630 mW/cm$^2$ (measured with an illuminance meter (UVICURE Plus II (UVA of 320 to 390 nm), manufactured by EIT, Inc.). In addition, the irradiation time was adjusted so that the integrated light amount was 4 J/cm$^2$.

(c) 3D Printer

A curable resin composition was cured (first curing (pre-curing)) by irradiation with an active energy ray using a commercially available 3D printer (Phrozen shuffle 4K, manufactured by Phrozen Tech Co., Ltd.), and a layer having a film thickness of 100 μm was laminated, thereby obtaining a plate of 100×50×20 mm. The power of the active energy ray was set at 0.6 mW/cm$^2$ (measured with an illuminance meter (3664 Optical Power Meter, manufactured by HIOKI E.E. CORPORATION (measurement wavelength of 405 nm)). The irradiation time was set at 90 seconds for the first 10 layers, and 40 seconds for the subsequent layers.

Thereafter, the obtained plate was further cured.

In the second curing (post curing), only one surface of the above-described plate was irradiated with an active energy ray with a high-pressure mercury vapor lamp (high-pressure mercury lamp (customized product), manufactured by Heraeus Holding GmbH).

The illuminance was set at 630 mW/cm$^2$ (measured with an illuminance meter (UVICURE Plus II (UVA of 320 to 390 nm), manufactured by EIT, Inc.). In addition, the irradiation time was adjusted so that the integrated light amount was 4 J/cm$^2$.

<Evaluation>

(1) Mechanical Properties

The tensile strength (MPa) and the breaking elongation (%) of the molded product were measured in conformity with the description of JIS K-6251 (2010).

The tear strength (N/mm) of the molded product was also measured in conformity with the description of JIS K-6252 (2007).

(2) Light Resistance (Weather Resistance)

The molded product was subjected to a light resistance test under the following conditions, and a difference of b value (Δb value) before or after the test was measured with a color difference meter (manufactured by Tokyo Denshoku CO., LTD., Color Ace MODEL TC-1).

Testing machine: Ci4000, manufactured by Atlas

Irradiance: 44 W/m$^2$

Wavelength range: 300 to 400 nm

Black panel temperature: 57°C

Rainfall conditions: none

Test humidity: not controlled

Filter (inside/outside): delight filter

Test time: 40 h

(3) Hysteresis Loss

The hysteresis (%) of the molded product was measured in conformity with JIS K7312 (1996). The measurement conditions are shown below.

Temperature: 23°C

Rate: 0.83 mm/s

Test piece shape: No. 3 shape of JIS K73121 (1996)

Distance of gripper: 55 mm

Gauge length: 20 mm

Elongation: 100%

[Table 1]

Table 1

| No. | | | Ex. 1 | Ex. 2 | Ex. 3 | Ex. 4 | Ex. 5 |
|---|---|---|---|---|---|---|---|
| Isocyanate Group-Terminated Prepolymer | | No. | UA-4 | UA-4 | UA-4 | UA-4 | UA-3 |
| | | Polyisocyanate Component | 1,3-H6XDI | 1,3-H6XDI | 1,3-H6XDI | 1,3-H6XDI | 1,3-H6XDI |
| | | Polyol Component | DL10000 | DL10000 | DL10000 | DL10000 | DL6000 |
| | | Equivalent Ratio (NCO/OH) | 8.0 | 8.0 | 8.0 | 8.0 | 8.0 |
| Hydroxy Group-Containing Unsaturated Compound | | | HEA | HEA | HEA | HEA | HEA |
| Equivalent Ratio (NCO/OH) | | | 1.0 | 1.0 | 1.0 | 1.0 | 1.0 |
| Active Energy Ray-Curable Polyurethane Resin | | | Distillation | Distillation | Distillation | Distillation | Distillation |
| Viscosity (25°C) | | mP·as | 27000 | 27000 | 27000 | 27000 | 14100 |
| Active Energy Ray-Curable Polyurethane Resin | | parts | 50 | 50 | 50 | 50 | 50 |
| Radical Reactive Diluent | IBXA | parts | - | - | - | - | - |
| | Viscoat 200 | parts | 40 | 40 | 40 | 40 | 40 |
| | AO-MA | parts | 10 | 10 | 10 | 10 | 10 |
| | FA-513AS | parts | - | - | - | - | - |
| | TMPTA | parts | - | - | - | - | - |
| | TBCHA | parts | - | - | - | - | - |
| | DEAA | parts | - | - | - | - | - |
| Photopolymerization Initiator | TP0 | phr | 3 | - | 3 | 3 | 0.5 |
| | Irgacure819 | phr | - | 3 | - | - | - |
| Antioxidant | Irganox245 | phr | 0.1 | 0.1 | 0.1 | 0.1 | 0.1 |
| Viscosity (25°C) | | mPa·s | 900 | 900 | 900 | 900 | 740 |
| Curing Method | | | 3D Printer | 3D Printer | UV Irradiator | High-Pressure Mercury Vapor Lamp | UV Irradiator |

| No. | | | Ex. 1 | Ex. 2 | Ex. 3 | Ex. 4 | Ex. 5 |
|---|---|---|---|---|---|---|---|
| Evaluation | Breaking Strength | MPa | 6.0 | 5.8 | 6.09 | 9.33 | 5.3 |
| | Breaking Elongation | % | 274 | 283 | 273 | 353 | 220 |
| | Tear Strength | N/mm | 26.8 | 28.6 | 28.56 | 37.95 | 23.8 |
| | Light Resistance | $\Delta$b | 1.2 | 1.9 | 1.2 | 1.2 | 1.8 |
| | Hysteresis Loss | Tension of 100% | 31.84 | 32.5 | 27.5 | 26.5 | 34.5 |

[Table 2]

Table 2

| No. | | | Ex. 6 | Ex. 7 | Ex. 8 | Ex. 9 | Ex. 10 |
|---|---|---|---|---|---|---|---|
| Isocyanate Group-Terminated Prepolymer | No. | | UA-6 | UA-4 | UA-4 | UA-4 | UA-4 |
| | Polyisocyanate Component | | 1,3-H6XDI | 1,3-H6XDI | 1,3-H6XDI | 1,3-H6XDI | 1,3-H6XDI |
| | Polyol Component | | DL12000 | DL10000 | DL10000 | DL10000 | DL10000 |
| | Equivalent Ratio (NCO/OH) | | 8.0 | 8.0 | 8.0 | 8.0 | 8.0 |
| Hydroxy Group-Containing Unsaturated Compound | | | HEA | HEA | HEA | HEA | HEA |
| Equivalent Ratio (NCO/OH) | | | 1.0 | 1.0 | 1.0 | 1.0 | 1.0 |
| Active Energy Ray-Curable Polyurethane Resin | | | Distillation | Distillation | Distillation | Distillation | Distillation |
| Viscosity (25°C) | | mPa·s | 39000 | 27000 | 27000 | 27000 | 14100 |
| Active Energy Ray-Curable Polyurethane Resin | | parts | 50 | 50 | 50 | 50 | 50 |
| Radical Reactive Diluent | IBXA | parts | - | - | - | - | 50 |
| | Viscoat 200 | parts | 40 | 50 | 50 | - | - |
| | AO-MA | parts | 10 | - | - | 50 | - |
| | FA-513AS | parts | - | - | - | - | - |
| | TMPTA | parts | - | - | - | - | - |
| | TBCHA | parts | - | - | - | - | - |
| | DEAA | parts | - | - | - | - | - |
| Photopolymerization Initiator | TP0 | phr | 0.5 | 0.5 | 0.5 | 0.5 | 0.5 |
| | Irgacure819 | phr | - | - | - | - | - |
| Antioxidant | Irganox245 | phr | 0.1 | 0.1 | 0.1 | 0.1 | 0.1 |
| Viscosity (25°C) | | mPa·s | 1250 | 1150 | 1150 | 230 | 980 |
| Curing Method | | | UV Irradiator | UV Irradiator | 3D Printer | UV Irradiator | UV Irradiator |

(continued)

| No. | | | Ex. 6 | Ex. 7 | Ex. 8 | Ex. 9 | Ex. 10 |
|---|---|---|---|---|---|---|---|
| Evaluation | Breaking Strength | MPa | 7.2 | 5.66 | 5.24 | 12.48 | 15.24 |
| | Breaking Elongation | % | 290 | 235 | 293 | 221 | 375 |
| | Tear Strength | N/mm | 29.8 | 15.92 | 21.2 | 34.70 | 22.6 |
| | Light Resistance | $\Delta b$ | 1.7 | 1.8 | 1.8 | 2 | 2.3 |
| | Hysteresis Loss | Tension of 100% | 32.1 | 34.8 | 32.8 | 30.9 | 35.1 |

[Table 3]

[Table 3]

Table 3

| No. | | | Ex. 11 | Ex. 12 | Ex. 13 | Ex. 14 | Ex. 15 |
|---|---|---|---|---|---|---|---|
| Isocyanate Group-Terminated Prepolymer | | No. | UA-4 | UA-4 | UA-4 | UA-4 | UA-4 |
| | | Polyisocyanate Component | 1,3-H6XDI | 1,3-H6XDI | 1,3-H6XDI | 1,3-H6XDI | 1,3-H6XDI |
| | | Polyol Component | DL10000 | DL10000 | DL10000 | DL10000 | DL10000 |
| | | Equivalent Ratio (NCO/OH) | 8.0 | 8.0 | 8.0 | 8.0 | 8.0 |
| Hydroxy Group-Containing Unsaturated Compound | | | HEA | HEA | HEA | HEA | HEA |
| Equivalent Ratio (NCO/OH) | | | 1.0 | 1.0 | 1.0 | 1.0 | 1.0 |
| Active Energy Ray-Curable Polyurethane Resin | | | Distillation | Distillation | Distillation | Distillation | Distillation |
| Viscosity (25°C) | | mPa·s | 27000 | 27000 | 27000 | 27000 | 27000 |
| Active Energy Ray-Curable Polyurethane Resin | | parts | 50 | 50 | 50 | 50 | 50 |
| Radical Reactive Diluent | IBXA | parts | - | - | - | - | - |
| | Viscoat 200 | parts | - | - | - | - | 40 |
| | AO-MA | parts | - | - | - | - | 10 |
| | FA-513AS | parts | 50 | - | - | - | - |
| | TMPTA | parts | - | - | 50 | - | - |
| | TBCHA | parts | - | 50 | - | - | - |
| | DEAA | parts | - | - | - | 50 | - |
| Photopolymerization Initiator | TP0 | phr | 0. 5 | 0.5 | 0.5 | 0.5 | 0.5 |
| | Irgacure819 | phr | - | - | - | - | - |
| Antioxidant | Irganox245 | phr | 0.1 | 0.1 | 0.1 | 0.1 | 0.1 |
| Viscosity (25°C) | | mPa·s | 1270 | 920 | 3800 | 250 | 900 |
| Curing Method | | | UV Irradiator | UV Irradiator | UV Irradiator | UV Irradiator | UV Irradiator |

(continued)

| No. | | | Ex. 11 | Ex. 12 | Ex. 13 | Ex. 14 | Ex. 15 |
|---|---|---|---|---|---|---|---|
| Evaluation | Breaking Strength | MPa | 6.65 | 5.63 | 6.8 | 6.98 | 9.29 |
| | Breaking Elongation | % | 376 | 418 | 150 | 467 | 245 |
| | Tear Strength | N/mm | 28.41 | 11.26 | 26.5 | 37.14 | 25.96 |
| | Light Resistance | Δb | 8 | 9 | 2.5 | 10 | 1.5 |
| | Hysteresis Loss | Tension of 100% | 36.1 | 35.8 | 40.8 | 56.4 | 28.3 |

[Table 4]

[Table 4]

Table 4

| No. | | Comparative Ex. 1 | Comparative Ex. 2 | Comparative Ex. 3 | Comparative Ex. 4 | Comparative Ex. 5 | Comparative Ex. 6 |
|---|---|---|---|---|---|---|---|
| Isocyanate Group-Terminated Prepolymer | No. | UA-1 | UA-2 | UA-7 | UA-5 | UA-8 | UA-10 |
| | Polyisocyanate Component | 1,3-H6XDI | 1,3-H6XDI | 1,3-H6XDI | 1,3-H6XDI | 1,3-H6XDI | H12MDI |
| | Polyol Component | D2000 | DL4000 | DL13000 | DL10000 | ED-37A | DL10000 |
| | Equivalent Ratio (NCO/OH) | 8.0 | 8.0 | 8.0 | 2.0 | 8.0 | 8.0 |
| Hydroxy Group-Containing Unsaturated Compound | | HEA | HEA | HEA | HEA | HEA | HEA |
| Equivalent Ratio (NCO/OH) | | 1.0 | 1.0 | 1.0 | 1.0 | 1.0 | 1.0 |
| Active Energy Ray-Curable Polyurethane Resin | | Distillation | Distillation | Distillation | - | Distillation | Distillation |
| Viscosity (25°C) | mPas | 12500 | 36600 | 44500 | 150000 | 11000 | 56000 |

(continued)

| No. | | | Comparative Ex. 1 | Comparative Ex. 2 | Comparative Ex. 3 | Comparative Ex. 4 | Comparative Ex. 5 | Comparative Ex. 6 |
|---|---|---|---|---|---|---|---|---|
| Active Energy Ray-Curable Polyurethane Resin | | parts | 50 | 50 | | | 50 | |
| Radical Reactive Diluent | IBXA | parts | - | - | | | - | |
| | Viscoat 200 | parts | 40 | 40 | | | 40 | |
| | A0-MA | parts | 10 | 10 | | | 10 | |
| | FA-513AS | parts | - | - | | | - | |
| | TMPTA | parts | - | - | | | - | |
| | TBCHA | parts | - | - | | | - | |
| | DEAA | parts | - | - | | | - | |
| Photopolymerization Initiator | TP0 | phr | 0.5 | 0.5 | Preparation Impossible | Preparation Impossible | 0.5 | Preparation Impossible |
| | Irgacure819 | phr | - | - | | | - | |
| Antioxidant | Irganox245 | phr | 0.1 | 0.1 | | | 0.1 | |
| Viscosity (25°C) | | mPas | 250 | 400 | | | 180 | |
| Curing Method | | | UV Irradiator | UV Irradiator | | | UV Irradiator | |
| Evaluation | Breaking Strength | MPa | 3.2 | 4.1 | | | 120 | |
| | Breaking Elongation | % | 118 | 140 | | | 54 | |
| | Tear Strength | N/mm | 11.0 | 15.1 | | | 4.80 | |
| | Light Resistance | $\Delta b$ | 2.2 | 2.4 | | | 1.8 | |
| | Hysteresis Loss | Tension of 100% | 63.1 | 52.6 | | | 75.5 | |

[Table 5]

[Table 5]

Table 5

| No. | | | Comparative Ex. 7 | Comparative Ex. 8 | Comparative Ex. 9 | Comparative Ex. 10 | Comparative Ex. 11 |
|---|---|---|---|---|---|---|---|
| Isocyanate Group-Terminated Prepolymer | | No. | UA-9 | UA-12 | UA-11 | UA-14 | UA-13 |
| | | Polyisocyanate Component | H12MDI | IPDI | IPDI | TDI | TDI |
| | | Polyol Component | D3000 | DL10000 | D3000 | DL10000 | D3000 |
| | | Equivalent Ratio (NCO/OH) | 8.0 | 8.0 | 8.0 | 8.0 | 8.0 |
| Hydroxy Group-Containing Unsaturated Compound | | | HEA | HEA | HEA | HEA | HEA |
| Equivalent Ratio (NCO/OH) | | | 1.0 | 1.0 | 1.0 | 1.0 | 1.0 |
| Active Energy Ray-Curable Polyurethane Resin | | | Distillation | Distillation | Distillation | Distillation | Distillation |
| Viscosity (25°C) | | mPa·s | 38500 | 37500 | 35000 | 45000 | 37000 |
| Active Energy Ray-Curable Polyurethane Resin | | parts | 50 | 50 | 50 | 50 | 50 |
| Radical Reactive Diluent | IBXA | parts | - | - | - | - | - |
| | Viscoat 200 | parts | 40 | 40 | 40 | 40 | 40 |
| | AO-MA | parts | 10 | 10 | 10 | 10 | 10 |
| | FA-513AS | parts | - | - | - | - | - |
| | TMPTA | parts | - | - | - | - | - |
| | TBCHA | parts | - | - | - | - | - |
| | DEAA | parts | - | - | - | - | - |
| Photopolymerization Initiator | TP0 | phr | 0.5 | 0.5 | 0.5 | 0.5 | 0.5 |
| | Irgacure819 | phr | - | - | - | - | - |
| Antioxidant | Irganox245 | phr | 0.1 | 0.1 | 0.1 | 0.1 | 0.1 |
| Viscosity (25°C) | | mPa·s | 1100 | 850 | 560 | 1430 | 820 |
| Curing Method | | | UV Irradiator | UV Irradiator | UV Irradiator | UV Irradiator | UV Irradiator |

(continued)

| No. | | | Comparative Ex. 7 | Comparative Ex. 8 | Comparative Ex. 9 | Comparative Ex. 10 | Comparative Ex. 11 |
|---|---|---|---|---|---|---|---|
| Evaluation | Breaking Strength | MPa | 3.4 | 4.1 | 1.9 | 10 | 5.6 |
| | Breaking Elongation | % | 145 | 136 | 78 | 265 | 150 |
| | Tear Strength | N/mm | 17.5 | 10.5 | 9.8 | 42 | 25 |
| | Light Resistance | Δb | 2.4 | 1.9 | 2 | 12 | 20 |
| | Hysteresis Loss | Tension of 100% | 42.5 | 45.6 | 50.8 | 33.4 | 46.2 |

The details of abbreviations in Tables are described below.

1,3-H6XDI: 1,3-hydrogenated xylylene diisocyanate, manufactured by Mitsui Chemicals, Inc.

IPDI: isophorone diisocyanate, trade name: VESTANAT IPDI, manufactured by Evonik Industries AG

H12MDI: 4,4'-methylenebis(cyclohexyl isocyanate), trade name: VESTANAT H$_{12}$MDI, manufactured by Evonik Industries AG

TDI: mixture of 2,4-tolylene diisocyanate (80%) and 2,6-tolylene diisocyanate (20%), trade name: TDI-80, manufactured by Mitsui Chemicals, Inc.

ED-37A: polyoxyethylene-polyoxypropylene copolymer, average functionality of 2, number average molecular weight of 3000, degree of unsaturation of 0.06 meq./g, manufactured by Mitsui Chemicals & SKC Polyurethanes Inc.

D2000: polyoxypropylene polyol, average functionality of 2, number average molecular weight of 2000, degree of unsaturation of 0.03 meq./g, manufactured by Mitsui Chemicals & SKC Polyurethanes Inc.

D3000: polyoxypropylene polyol, average functionality of 2, number average molecular weight of 3000, degree of unsaturation of 0.05 meq./g, manufactured by Mitsui Chemicals & SKC Polyurethanes Inc.

DL4000: polyoxypropylene polyol, average functionality of 2, number average molecular weight of 4000, degree of unsaturation of 0.01 meq./g, manufactured by Mitsui Chemicals & SKC Polyurethanes Inc.

DL6000: polyoxypropylene polyol, average functionality of 2, number average molecular weight of 6000, degree of unsaturation of 0.01 meq./g, manufactured by Mitsui Chemicals & SKC Polyurethanes Inc.

DL10000: polyoxypropylene polyol, average functionality of 2, number average molecular weight of 10000, degree of unsaturation of 0.01 meq./g, manufactured by Mitsui Chemicals & SKC Polyurethanes Inc.

DL12000: polyoxypropylene polyol, average functionality of 2, number average molecular weight of 12000, degree of unsaturation of 0.02 meq./g, manufactured by Mitsui Chemicals & SKC Polyurethanes Inc.

DL13000: polyoxypropylene polyol, average functionality of 2, number average molecular weight of 13000, degree of unsaturation of 0.02 meq./g, manufactured by Mitsui Chemicals & SKC Polyurethanes Inc.

HEA: hydroxyethyl acrylate

IBXA: radical reactive diluent, isobornyl acrylate, reactive compound having an alicyclic hydrocarbon skeleton, manufactured by OSAKA ORGANIC CHEMICAL INDUSTRY LTD.

Viscoat 200: radical reactive diluent, cyclic trimethylolpropane formal acrylate (also known as (5-ethyl-1,3-dioxane-5-yl)methyl acrylate), reactive compound having an alicyclic ether skeleton, manufactured by OSAKA ORGANIC CHEMICAL INDUSTRY LTD.

AOMA: radical reactive diluent, 2-(allyloxymethyl)methyl acrylate, compound having a (meth)acryloyl group and a vinyl group in combination, manufactured by NIPPON SHOKUBAI CO., LTD.

FA-513AS: radical reactive diluent, dicyclopentanyl acrylate, reactive compound having an alicyclic hydrocarbon skeleton, manufactured by Hitachi Chemical Co., Ltd.

TBCHA: radical reactive diluent, 4-tert-butylcyclohexyl acrylate, reactive compound having an alicyclic hydrocarbon skeleton, manufactured by KJ Chemicals Corporation

DEAA: radical reactive diluent, N,N-diethylacrylamide, reactive compound having an amide skeleton, manufactured by KJ Chemicals Corporation

TMPTA: radical reactive diluent, trimethylolpropane triacrylate, poly(meth)acrylate, manufactured by OSAKA ORGANIC CHEMICAL INDUSTRY LTD.

TPO: photopolymerization initiator, diphenyl(2,4,6-trimethylbenzoyl)phosphine oxide, manufactured by TOKYO CHEMICAL INDUSTRY CO., LTD.

Irgacure819: photopolymerization initiator, bis(2,4,6-trimethylbenzoyl)phenylphosphine oxide, manufactured by BASF SE

Irganox245: hindered phenol antioxidant, ethylene bis(oxyethylene) bis-(3-(5-tert-butyl-4-hydroxy-m-tolyl)propionate, manufactured by BASF SE

Example 17

In Example 8, MEDOL-10 (radical reactive diluent, (2-methyl-2-ethyl-1,3-dioxolane-4-yl)methyl acrylate, reactive compound having an alicyclic ether skeleton, manufactured by OSAKA ORGANIC CHEMICAL INDUSTRY LTD.) was blended instead of Viscoat 200 in the above-described Tables. As a result, Δb value of the molded product was improved to 0.7.

Example 18

In Example 1, AOMA was blended instead of Viscoat 200 in the above-described Tables. In addition, MEDOL-10 was blended instead of AOMA in the above-described Tables. As a result, the breaking strength of the molded product was improved to 9.6 MPa.

Example 19

In Example 1, AOMA was blended instead of Viscoat 200 in the above-described Tables. In addition, 4HBA (radical reactive diluent, 4-hydroxybutyl acrylate, hydroxy group-containing (meth)acrylate, manufactured by OSAKA ORGANIC CHEMICAL INDUSTRY LTD.) was blended instead of AOMA in the above-described Tables. As a result, the tear strength of the molded product was improved to 36 N/mm.

Example 20

In Example 8, ACMO-LI (radical reactive diluent, acryloylmorpholine, reactive compound having an alicyclic ether skeleton, manufactured by KJ Chemicals Corporation) was blended instead of Viscoat 200 in the above-described Tables.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The active energy ray-curable polyurethane resin, the curable resin composition, and the active energy-ray curable polyurethane resin of the present invention are preferably used in, for example, adhesives, coating agents, elastomers, and molding materials.

**Claims**

1. An active energy ray-curable polyurethane resin comprising:

a reaction product of a resin material containing an isocyanate group-terminated prepolymer and a hydroxy group-containing unsaturated compound, wherein
the isocyanate group-terminated prepolymer includes
a reaction product of a prepolymer material containing
a polyisocyanate component containing a xylylene diisocyanate and/or a hydrogenated xylylene diisocyanate, and
a polyol component containing a polyoxyalkylene polyol having a number average molecular weight of 6000 or more and 12000 or less, and
the viscosity at 25°C of the active energy ray-curable polyurethane resin is 20000 mPa·s or more and 40000 mPa·s or less.

2. A curable resin composition comprising:

the active energy ray-curable polyurethane resin according to claim 1 and
a radical reactive diluent.

3. The curable resin composition according to claim 2, wherein
the radical reactive diluent includes a (meth)acrylate having an alicyclic ether skeleton.

4. A production method for an active energy ray-curable polyurethan resin comprising:

a step of reacting a prepolymer material containing a polyisocyanate component containing a xylylene diisocyanate and/or a hydrogenated xylylene diisocyanate, and a polyol component containing a polyoxyalkylene polyol having a number average molecular weight of 6000 or more and 12000 or less to obtain an isocyanate group-terminated prepolymer;

a step of purifying the isocyanate group-terminated prepolymer by distillation; and
a step of reacting a resin material containing the purified isocyanate group-terminated prepolymer and a hydroxy group-containing unsaturated compound to obtain an active energy ray-curable polyurethane resin having the viscosity at 25°C of 20000 mPa·s or more and 40000 mPa·s or less.

## INTERNATIONAL SEARCH REPORT

| International application No. |
| --- |
| PCT/JP2021/013216 |

A. CLASSIFICATION OF SUBJECT MATTER
Int.Cl. C08G18/67(2006.01)i, C08F290/06(2006.01)i, C08G18/10(2006.01)i,
C08G18/66(2006.01)i, C08G18/74(2006.01)i
FI: C08G18/67, C08G18/10, C08G18/74, C08G18/66066, C08F290/06
According to International Patent Classification (IPC) or to both national classification and IPC

B. FIELDS SEARCHED

Minimum documentation searched (classification system followed by classification symbols)
Int.Cl. C08G18/67, C08F290/06, C08G18/10, C08G18/66, C08G18/74

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-275470 A (MITSUI CHEMICALS, INC.) 09 December 2010 (2010-12-09), entire text | 1-4 |
| A | JP 2006-104296 A (NITTO DENKO CORPORATION) 20 April 2006 (2006-04-20), entire text | 1-4 |
| A | JP 9-324135 A (JAPAN SYNTHETIC RUBBER CO., LTD.) 16 December 1997 (1997-12-16), entire text | 1-4 |
| A | JP 2018-135479 A (JAPAN COMPOSITE CO., LTD.) 30 August 2018 (2018-08-30), entire text | 1-4 |

☐ Further documents are listed in the continuation of Box C.   ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 01 June 2021 | 15 June 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/013216

| | | |
|---|---|---|
| JP 2010-275470 A | 09 December 2010 | (Family: none) |
| JP 2006-104296 A | 20 April 2006 | (Family: none) |
| JP 9-324135 A | 16 December 1997 | WO 1997/046627 A1<br>entire text |
| JP 2018-135479 A | 30 August 2018 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11315265 A